# EUROPÄISCHE PATENTSCHRIFT

(11) **EP 3 487 442 B1**
(45) Veröffentlichungstag und Bekanntmachung des Hinweises auf die Patenterteilung: **29.12.2021**
(21) Anmeldenummer: 17752276.0
(22) Anmeldetag: 18.07.2017
(51) Int. Cl.: A61C 8/00

(54) **SUPRASTRUKTURTRÄGER MIT BESONDERER IMPLANTATPFOSTENGEOMETRIE**
SUPERSTRUCTURE SUPPORT HAVING SPECIAL IMPLANT POST GEOMETRY
SUPPORT DE SUPERSTRUCTURE PRÉSENTANT UNE GÉOMÉTRIE DE PILIER D'IMPLANT

(30) Priorität: 20.07.2016 DE 102016008669
(43) Veröffentlichungstag der Anmeldung: 29.05.2019
(73) Patentinhaber: Spindler, Bruno, 77728 Oppenau (DE)
(72) Erfinder: Spindler, Bruno, 77728 Oppenau (DE)
(74) Vertreter: Thämer, Wolfgang
(86) Internationale Anmeldenummer: PCT/DE2017/000212
(87) Internationale Veröffentlichungsnummer: WO 2018/014897

(56) Entgegenhaltungen:
- EP-A1- 2 644 152
- WO-A1-98/42273
- WO-A2-2014/012973
- DE-A1-102013 013 565

## Beschreibung

Die Erfindung betrifft einen Suprastrukturträger mit einem Aufsetzelement als Teil eines prothetischen Zahnersatzes zwischen einem Implantatkörper und einer Suprakonstruktion, mit einem hohlen Implantatpfosten, einem hohlen Implantatzapfen und einem dazwischen liegenden Implantatflansch. Die Aushöhlungszonen des Implantatpfostens und des Implantatzapfens gehen ineinander über. Deren Mittellinien schneiden sich. Auf dem Implantatpfosten ist das Aufsetzelement über eine - eine Schnittstelle bildende - Montagefuge verdrehsicher anordenbar.

In der zahnärztlichen Implantologie wird u.a. im Rahmen der Herstellung eines prothetischen Einzelzahnersatzes häufig ein enossaler Implantatkörper verwendet, der die Prothese trägt. In diesem Fall wird der Implantatkörper, eine Art Schraubdübel, in einer künstlich im Patientenkiefer erzeugten Bohrung eingeschraubt. Der eingeschraubte Implantatkörper nimmt bei der fertigen Prothese einen Suprastrukturträger auf. Letzterer wird beispielsweise verdrehsicher im Implantatkörper mit einer speziellen Schraube verschraubt. Auf den Suprastrukturträger wird direkt oder indirekt eine die sichtbare Zahnkrone bildende Suprastruktur, z.B. durch Verkleben, aufgesetzt.

Aus der DE 20 2012 102 746 U1 ist ein Zahnimplantataufbausystem bekannt, bei dem ein Implantatkörper, ein Suprastrukturträger, ein Klebekörper und eine künstliche Krone einen künstlichen Zahnersatz bilden.

Die WO 2014/012973 A2 beschreibt ein Zahnimplantataufbausystem, bei dem ein Implantatkörper, ein Suprastrukturträger, ein Klebekörper und eine künstliche Krone einen künstlichen Zahnersatz bilden. Der Suprastrukturträger hat zur Abstützung der künstlichen Krone eine zum Implantatpfosten orientierte Abstützhüllfläche, die eine abgesenkte bukkale Außenschulter aufweist.

Aus der DE 10 2013 013 565 A1 ist ebenfalls ein Zahnimplantataufbausystem bekannt, bei dem die künstliche Krone auf einer zum Implantatpfosten hin orientierten räumlich gekrümmten Abstützhüllfläche aufliegt.

Der vorliegenden Erfindung liegt die Problemstellung zugrunde, einen Suprastrukturträger so zu verbessern, dass die zwischen dem Implantatpfosten und dem jeweiligen Aufsetzelement gelegene Schnittstelle ein sicheres und einfaches Fügen und Trennen der Schnittstellenbauteile ermöglicht.

Diese Problemstellung wird mit den Merkmalen des Patentanspruchs 1 gelöst. Dabei ist das Aufsetzelement ist eine künstliche Krone, ein Verbund aus einem Klebekörper und einer Krone oder ein anderes kappenartiges Element. Zumindest Bereiche des Implantatflansches haben eine Abstützhüllfläche. Das Aufsatzelement hat eine Schnittstellengeometrie, die zumindest bereichsweise form- und/oder kraftschlüssig auf der Schnittstellengeometrie der Suprastrukturträger montierbar ist. Die jeweilige Schnittstellengeometrie hat unter Ausschluss eines oder mehrerer die Verdrehsicherung garantierenden Geometriebereiche eine äußere oder eine innere Hüllfläche. Der Implantatpfosten oder das Aufsetzelement weist jeweils eine Basisfläche auf, die mit der Hüllfläche desselben Bauteils einen Spaltraum einschließt, dessen mittlere Stärke mehr als 0,05 mm misst. Im Spalteraum stehen von der jeweiligen Basisfläche mehrere Erhebungen in Form von Stollen, Stegen, Zapfen, Nasen oder Noppen vom Implantatpfosten oder vom Aufsetzelement ab.

Der Suprastrukturträger ist zwischen einem Implantatkörper und einer Suprastruktur angeordnet, wobei der Suprastrukturträger in einem klebekörper- und/oder kronentragenden Bereich einen Implantatpfosten und in dem dem Zahnfleisch und dem Implantatkörper zugewandten Bereich mindestens einen Implantathals aufweist. Der Suprastrukturträger wird aus einem Rohling gefertigt, der z.B. mittels eines Pulverspritzgießverfahrens hergestellt wird. Als Metallpulver wird hier beispielsweise die Titanlegierung Ti6Al4V verwendet. Der Rohling erhält im klebekörper- und/oder kronentragenden Bereich durch die Spritzgießform eine der Fertigform mathematisch ähnliche Form. Der Rohling erhält in dem dem Zahnfleisch und dem Implantatkörper zugewandten Bereich durch die Spritzgießform die Form eines Rohzapfens. Der Rohzapfen erhält durch mechanisch und/oder optisch trennende Bearbeitung seine Fertigform.

Der Suprastrukturträger hat einen Implantatpfosten, dessen äußere Gestalt z.B. einem geraden Kegelstumpf entspricht. Der Implantatpfosten basiert auf dem Implantatflansch des Suprastrukturträgers, vom dem er senkrecht absteht. Der äußere Rand des Implantatflansches hat beispielsweise eine Kreisform, deren Mittelpunkt konzentrisch zur Mittellinie des Implantatpfostens orientiert ist. Auf diese Weise ist auf dem einzelnen Implantatpfosten als Aufsetzelement z.B. ein Klebekörper und/oder eine Zahnkrone dauerhaft aufsetzbar, der bzw. die z.B. aus einem rotationssymmetrischen Rohling gefertigt sind.

Der Implantatpfosten und das Aufsetzelement haben eine gemeinsame Schnittstelle. Das Aufsetzelement kann auch ein nur temporär während der Prothesenfertigung und -anpassung verwendbares kappenartiges Element sein. Hier treffen die äußere Geometrieform des Implantatpfostens und die innere Geometrieform des Aufsetzelementes aufeinander. Zu dieser Schnittstelle gehören auch die Oberflächenbereiche des Implantatflansches, die dem Implantatpfosten zugewandt sind.

Die Geometrieformen der Schnittstelle sind so gestaltet, dass die Aufsetzelemente während der Prothesenplanung, Fertigung und Anpassung mehrfach problemlos ohne Verkanten oder größeren Kraftaufwand auf den Suprastrukturträger wiederholgenau aufgesetzt und wieder abgenommen werden können. Muss das Aufsetzelement auf dem Implantatpfosten z.B. aufgeklebt oder aufzementiert werden, befinden sich zwischen den einander gegenüberliegenden Geometrieformen Hohl- oder Spalträume. Diese Hohl- oder Spalträume erstrecken sich entweder in Richtung Implantatpfosten und/oder in Richtung des jeweiligen Aufsetzelementes. Sie dehnen sich zudem primär quer zur Aufsetzrichtung des jeweiligen Aufsetzelements aus.

U.a. um die Hohl- oder Spalträume zu schaffen, stehen vom Implantatpfosten und/oder vom Aufsetzelement mehrere Erhebungen in Form von Stollen, Stegen, Zapfen, Nasen, Noppen oder dergleichen ab. Sind z.B. auf einem konischen Implantatpfosten - auf dessen als Basisfläche bezeichneten Oberfläche - eine Vielzahl von gleichen Halbkugeln angeformt, bilden die am weitesten außenliegenden Punkte der sphärischen Krümmung der Halbkugeln eine Hüllfläche, die einen Kegelstumpfmantel darstellt. Der Zwischenraum zwischen der Basisfläche und der Hüllfläche bietet bei der Prothesenmontage den Füllraum für den Klebstoff oder den Zement der aushärtbaren kraftschlüssigen Verbindung zwischen den Schnittstellenteilen: Implantatpfosten und Aufsetzelement.

Weitere Einzelheiten der Erfindung ergeben sich aus den Unteransprüchen und der nachfolgenden Beschreibung schematisch dargestellter Ausführungsformen.
- Figur 1:: Explosionsmodell eines prothetischen Zahnersatzes;
- Figur 2:: Seitenansicht des prothetischen Zahnersatzes;
- Figur 3:: Längsschnitt durch einen prothetischen Zahnersatz, vergrößert;
- Figur 4:: Suprastrukturträger, perspektivisch;
- Figur 5:: Suprastrukturträger im Längsschnitt mit planer Abstützhüllfläche;
- Figur 6:: wie Figur 5, jedoch mit nach oben gewölbter Abstützhüllfläche;
- Figur 7:: wie Figur 5, jedoch mit nach unten gewölbter Abstützhüllfläche;
- Figur 8:: perspektivisch dargestellter Suprastrukturträger mit schraubenförmigen Nuten;
- Figur 9:: wie Figur 8, jedoch mit versetzt angeordneten Stollen;
- Figur 10:: perspektivisch dargestellter Klebekörper für den Suprastrukturträger nach Figur 8;
- Figur 11:: perspektivisch dargestellter Suprastrukturträger mit einer zylinder- und konusförmigen Hüllfäche;
- Figur 12:: perspektivisch dargestellter Klebekörper für den Suprastrukturträger nach Figur 11;
- Figur 13:: perspektivisch dargestellter Suprastrukturträger mit einer aus zwei verschiedenen Kegelstumpfmänteln bestehenden Hüllfäche;
- Figur 14:: perspektivisch dargestellter Klebekörper für den Suprastrukturträger nach Figur 13;
- Figur 15:: perspektivisch dargestellter Suprastrukturträger mit einem zapfenbesetzten Implantatpfosten und zapfenartiger Verdrehsicherung;
- Figur 16:: perspektivisch dargestellter Klebekörper für den Suprastrukturträger nach Figur 15;
- Figur 17:: perspektivisch dargestellter Suprastrukturträger mit einem zapfenbesetzten Implantatpfosten und verdrehsichernden Nuten;
- Figur 18:: perspektivisch dargestellter Klebekörper für den Suprastrukturträger nach Figur 17;
- Figur 19:: verkleinerter Längsschnitt durch einen Suprastrukturträger nach Figur 9 mit Klebekörper.

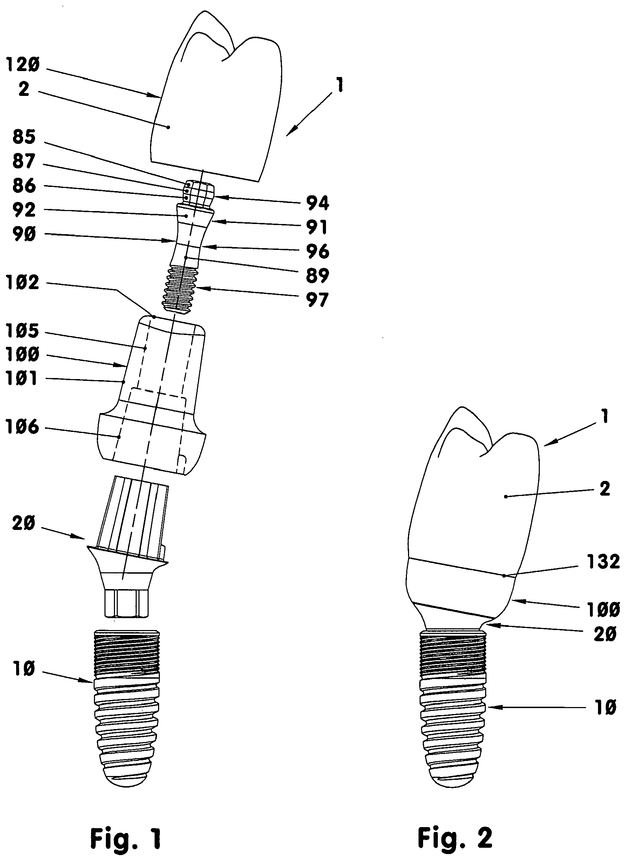

Die Figur 1 zeigt beispielhaft alle Teile eines künstlichen Zahnes (1) in Form einer Explosionszeichnung. Als Basis dient ein hohlschraubenartiger Implantatkörper (10). Mit ihm wird ein Suprastrukturträger (20) mittels einer speziellen Außensechskantschraube (90) verdrehsicher verschraubt. Auf dem dann freien Ende des Suprastrukturträgers (20), einem Implantatpfosten (23), wird dann ein Aufsetzelement (5) adaptiert. Letzteres kann ein nur kurzzeitig verwendetes Mess- und/oder Abformmittel sein oder auch eine fertige Zahnkrone (120). Zwischen dem Implantatpfosten (23) und dem Aufsetzelement (5) befindet sich demnach eine Schnittstelle (141, 145), deren positiver Schnittstellenteil (141) verschiedene negative Schnittstellenteile (145) zeitlich nacheinander aufnehmen kann.

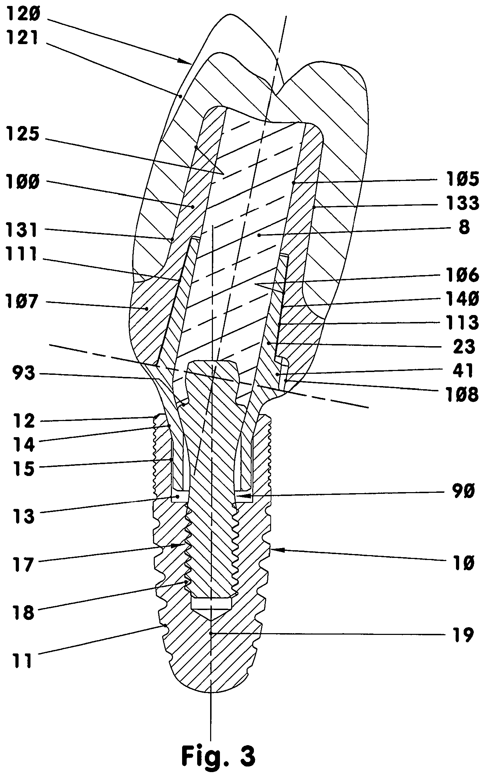

Der Implantatkörper (10) ist, nach den Figuren 1 bis 3, eine Hohlschraube mit einem ggf. selbstschneidenden, z.B. nichtmetrischen Außengewinde (11). Er weist z.B. bei einem Durchmesser von 3,53 mm eine Länge von 8,42 mm auf. Der Implantatkörper (10) hat eine mehrstufige Ausnehmung (13), die hier in drei Zonen aufgeteilt ist, vgl. Figur 3. Die erste Zone (14) - sie liegt im Bereich der Implantatschulter (12) des Implantatkörpers (10) - ist beispielsweise ein Innenkonus (14), der z.B. bei einer Höhe von 0,65 mm einen Kegelwinkel von z.B. 30 Winkelgraden aufweist, vgl. Figur 3. Der Innenkonus (14) geht - als Teil der zweiten Zone (15) - in eine als Verdrehsicherung dienende Ausgestaltung über, die z.B. die Form eines Innensechskants hat. Der Innensechskant (15) misst z.B. bei einer Höhe von 2,89 mm eine Schlüsselweite von 2,1 mm. An den Innensechskant (15), der z.B. auch ein Doppelinnensechskant oder eine andere form- oder kraftschlüssige Verdrehsicherungsgeometrie sein kann, schließt sich ggf. - hier nicht dargestellt - ein die Zentrierung des Suprastrukturträgers (20) im Implantatkörper (10) unterstützender Zylindersitz an. Der z.B. kurze Zylindersitz hat dann einen Durchmesser, der der Schlüsselweite des Innensechskants (15) entspricht.

Die dritte Zone (17) ist eine Gewindebohrung, die bei der Montage die den Suprastrukturträger (20) haltende Außensechskantschraube (90) aufnimmt. Hinter dem Ende des z.B. 2,9 mm langen M 1,6-Innengewindes (18) befindet sich z.B. ein kurzer zylindrischer Gewindeauslauf.

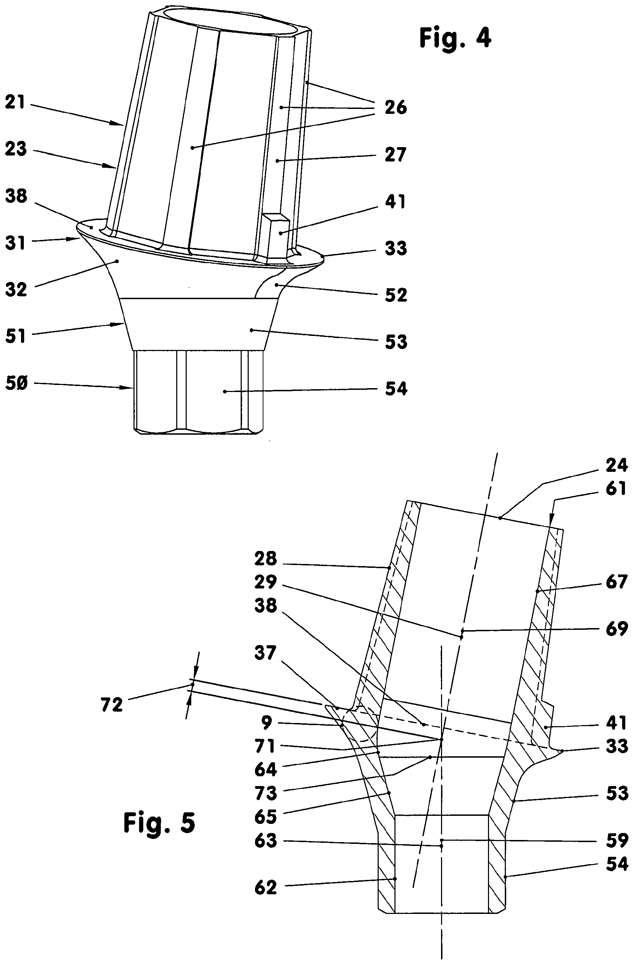

Der z.B. 7,67 mm lange Suprastrukturträger (20) hat primär die Aufgabe - im Implantatkörper (10) sitzend - als Basis für die künstliche Zahnkrone (120) zu dienen. Er hat einen Bereich (51), der dem Implantatkörper (10) zugewandt ist und einen Bereich (21), der die Zahnkrone (120) bzw. die Suprastruktur aufnimmt, vgl. Figuren 4 und 5.

Der dem Implantatkörper (10) zugewandte Bereich (51) ist der hohle Implantatzapfen (50). Dieser besteht aus einem z.B. im Mittel 1,04 mm langen Implantathals (52) mit seinem z.B. 0,94 mm langen Außenkonus (53), einem z.B. 1,5 mm langen Außensechskant (54) der Schlüsselweite von 2,1 mm und einem ggf. vorhandenen kurzen Zylinderansatz. Letzterer ist hier nicht dargestellt.

Der Außenkonus (53) und der Außensechskant (54) sitzen passgenau in der Ausnehmung (13) des Implantatkörpers (10). In der zur Spitze des Implantatkörpers (10) weisenden axialen Richtung kontaktieren die Stirnflächen des Außensechskants (54) und der ggf. vorhandene kurze Zylinderansatz die Ausnehmung (13) nicht.

Oberhalb des Implantatkonusses (53) schließt sich ein beispielsweise tellerartiger Implantatflansch (31) an, der z.B. mit einem stetigen Übergang aus dem Implantathals (52) hervorgeht, vgl. Figuren 4 bis 7. Die Unterseite (32) des z.B. runden Implantatflansches (31) hat zumindest bereichsweise die Form des Mantels eines Kegelstumpfes, dessen Konuswinkel sich zur Zahnkrone (120) hin öffnet. Der Konuswinkel liegt z.B. zwischen 90 und 135 Winkelgraden. Ggf. besteht die Unterseite des Implantatflansches (31) auch aus mehreren auseinander hervorgehenden, teilweise ungeraden Kegelkonen, wobei jeder gegenüber der Mittellinie (29) einen anderen Winkel einschließt. Die Übergänge zwischen den Kegelkonen sind ggf. ausgerundet.

Anstelle eines Teils der Kegelkonen des Implantathalses (52) können auch Freiformflächen verwendet werden.

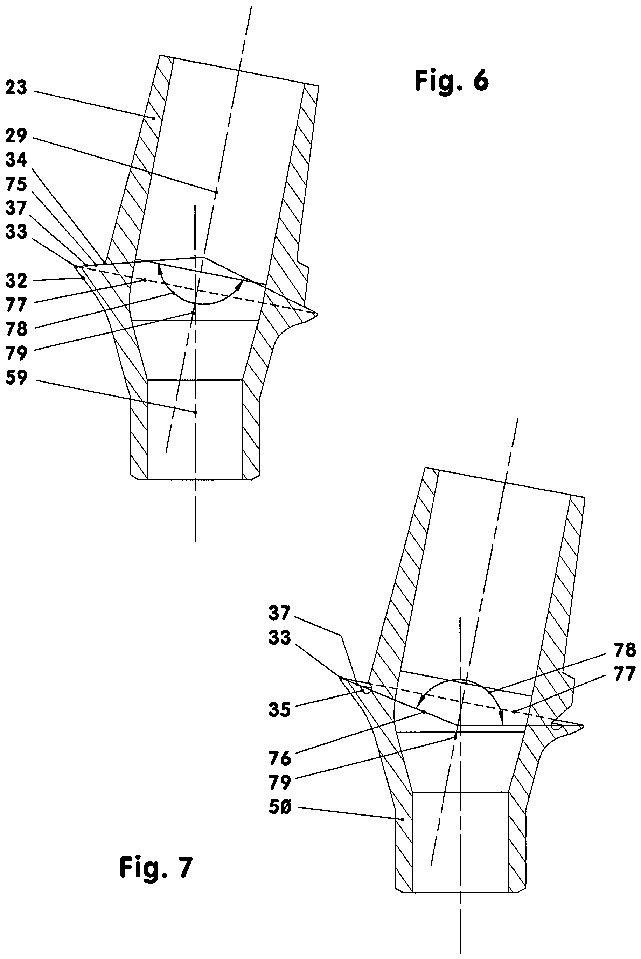

Der äußere Rand (33) des Implantatflansches (31) hat hier einen ggf. veränderlichen Abstand zur Mittellinie (29). Im Ausführungsbeispiel ist er konstant. Er beträgt z.B. 2,23 mm. Der Rand (33) ist dabei die äußere Begrenzung der Bezugsebene (38) oder der Stirnflächen (77) nach den Figuren 6 und 7. Der äußere Rand (33) erfährt hierbei in Längsrichtung der Mittellinie (29) im Ausführungsbeispiel keinen Höhenversatz. Bei anderen Ausführungsbeispielen ist er jedoch zumindest bereichsweise denkbar. Er kann dann z.B. bis zu 2 mm erreichen.

Oberhalb des Implantatflansches (31) erstreckt sich der Bereich (21) des Suprastrukturträgers (20) in Form eines Implantatpfostens (23) als positives Schnittstellenteil (141). Der z.B. 4,03 mm hohe, hohle Implantatpfosten (23) hat hier die Form eines sechseckigen geraden Pyramidenstumpfes. Der Pyramidenstumpf hat hier sechs lange Pyramidenkanten, in deren Bereich die Stollen (26) angeordnet sind. Die radial nach außen orientierten Außenflächen (27) der Stollen (26) sind Teilflächen einer gedachten Hüllfläche (28) in Form eines z.B. geraden Kegelstumpfmantels. Die Außenflächen (27) können dabei auf, unter oder über den theoretischen Pyramidenkanten liegen. Der Über- oder Unterstand kann bis zu 0,2 mm betragen. Der Kegelwinkel der Hüllfläche (28) misst in der Regel 5 bis 12 Winkelgrade. Hier beträgt der Kegelwinkel z.B. 7,36 Winkelgrade. Die kegelstumpfmantelförmige Hüllfläche (28) verjüngt sich mit zunehmender Entfernung vom Implantatflansch (31). Diese Hüllfläche (28) ist hier die Schnittstellengeometrie (142) der zwischen dem Implantatpfosten (23) und dem Klebekörper (100) gelegenen Montagefuge (140), die die Schnittstelle (141, 145) darstellt.

In den Figuren 4 und 5 hat der Implantatpfosten (23) z.B. in der Nähe des Implantatflansches (31) auf einem der Stollen (26) einen z.B. 0,85 mm langen Verdrehsicherungssteg (41), der über die gedachte kegelstumpfmantelförmige Hüllfläche (28) um beispielsweise 0,25 mm übersteht. Der Verdrehsicherungssteg (41) gehört nicht zur Schnittstellengeometrie (142). Die Breite des Verdrehsicherungsstegs (41) beträgt im Mittel z.B. 0,58 mm. Durch diese spezielle Form des Implantatpfostens (23) ergibt sich eine verdrehsichernde Basis für den zu tragenden Klebekörper (100) bzw. die direkt zu tragende Zahnkrone (120).

Nach oben hin schließt der Implantatpfosten (23) mit einer ggf. auch als Auflagefläche dienenden Oberseite (24) ab. Letztere, vgl. Figur 5, ist hier normal zur Mittellinie (29) ausgerichtet.

Der Implantatpfosten (23) hat z.B. einen ausgerundeten Übergangsbereich (34) zum Implantatflansch (31) hin. Um den Übergangsbereich (34) herum hat der Implantatflansch (31), nach den Figuren 4 und 5, eine - eine Ebene (38) bildende - Flanschoberseite (37). Die durch den Rand (33) außen begrenzte Ebene (38) wird von der Mittellinie (29) z.B. mittig und senkrecht geschnitten. Die großflächige Flanschoberseite (37) bildet u.a. eine Aufsitz- und Abstützhüllfläche für den Klebekörper (100) und/oder die Zahnkrone (120).

Der ausgerundete Übergangsbereich (34) kann auch in axialer Richtung parallel zur Mittellinie (29) um bis zu 0,2 mm vertieft werden, so dass zwischen der flächigen Flanschoberseite (37) und dem Implantatpfosten (23) eine z.B. umlaufende Rinne (35) entsteht, vgl. Figur 7.

Zusätzlich ist der Suprastrukturträger (20) zumindest oberhalb des Implantatflansches (31) mit einer Titannitridbeschichtung ausgestattet. Ihre Schichtdicke beträgt z.B. 1 bis 4 µm. Alternativ können dort auch dünnwandige Keramik- oder Copolymerbeschichtungen aufgetragen sein.

Nach Figur 1 hat der Suprastrukturträger (20) eine durchgehende Aushöhlung (61), die im mittleren Bereich eine Knickstelle mit einem eingeschlossenen Winkel von 73 ± 13 Winkelgraden aufweist. Die fertig bearbeitete Aushöhlung (61) besteht aus drei Aushöhlungszonen. Die untere Aushöhlungszone (62) gehört zum Implantatzapfen (50). Sie ist z.B. eine zylindrische Bohrung der Länge von z.B. 1,81 mm, deren Durchmesser z.B. 1,73 mm beträgt. An sie schließt sich der nach oben aufweitende Innenkonus (65) an. Der z.B. 1,08 mm hohe Innenkonus hat einen Kegelwinkel von z.B. 30 Winkelgraden. Er dient der Auflage des Kopfabschnitts der Schraube (90) und liegt unterhalb der Bezugsebene (38). Die Bohrung (62) und der Innenkonus (65) haben eine gemeinsame Mittellinie (63), die sich z.B. mit der an der Außenwandung des Implantatzapfens (50) orientierenden Mittellinie (59) deckt.

Nach Figur 3 wird diese Bohrung (62) - bei montierter Prothese - vom Schaft (96) der Außensechskantschraube (90) durchquert, wobei deren Schaft (96) die Wandung der Bohrung (62) nicht kontaktiert.

Die obere Aushöhlungszone (67), die im Implantatpfosten (23) verläuft, ist eine zylindrische Bohrung, deren Durchmesser z.B. bei einer Länge von 3,7 mm 2,42 mm misst. Sie dient der Einführung der Schraube (90) und der Führung des Werkzeuges, mit der die Schraube (90) angezogen wird. Ihre Mittellinie (69) ist z.B. konzentrisch zur außenwandungsorientierten Mittellinie (29) des Implantatpfostens (23) ausgerichtet. Die Bohrung (67) endet z.B. ca. 0,33 mm vor der Bezugsebene (38) des Implantatflansches (31).

Beide Mittellinien (63) und (69) schneiden sich im Ausführungsbeispiel in der mittleren Aushöhlungszone (64) in einem Schnittpunkt (71), der die obere (67) und die untere Aushöhlungszone (62) miteinander verbindet. Die mittlere Aushöhlungszone (64) ist eine gekrümmte Ausnehmung, in der sich die Bohrung (67) und der Innenkonus (65), z.B. in kantenfreien tangentialen Übergängen, aneinander anschließen. Die Schnittstelle (71) liegt dabei im Abstand (72) unterhalb der Bezugsebene (38). Der Abstand beträgt hier z.B. 0,22 mm. Dies ermöglicht eine tief im Suprastrukturträger (20) sitzende Schraube (90). Letztere befindet sich somit in der unteren Hälfte des Suprastrukturträgers (20).

In den Figuren 6 und 7 sind zwei Suprastrukturträger (20) dargestellt, deren Implantatflansch (31) jeweils anstelle einer ebenen Flanschoberseite eine kegelstumpfmantelförmige Abstützhüllfläche (75, 76) mit der Rotationsachse (79) aufweist. Nach Figur 6 ist die Kegelstumpfmantelfläche (75) so orientiert, dass ihre gedachte Spitze im Bereich des Implantatpfostens (23) liegt. Der Kegelwinkel (78) beträgt nach Figur 6 z.B. 150 Winkelgrade. In diesem Fall wird die Bezugsebene (38) der Figur 5 durch die große Stirnfläche (77) des Kegelstumpfmantels (75) ersetzt. Die Stirnfläche (77) wird vom Rand (33) des Implantatflansches (31) aufgespannt.

Nach Figur 7 ist die kegelstumpfmantelförmige Abstützhüllfläche (76) des Implantatflansches (31) nach unten gewölbt, wodurch die gedachte Spitze des Kegelstumpfmantels in Richtung des Implantatzapfens (59) zeigt. Auch hier bildet die große Stirnfläche (77) die Bezugsebene (38), unterhalb welcher der Schnittpunkt (71) liegt. Der Kegelwinkel (78) misst nach Figur 7 z.B. 158 Winkelgrade.

Der Suprastrukturträger (20) ist ein schlankes dünnwandiges Bauteil, das über weite Bereiche nur geringe Wandstärkenschwankungen aufweist. Einzelne überdurchschnittliche Materialanhäufungen werden konstruktiv vermieden. Nach Figur 5 ist der Suprastrukturträger (20) in der Ebene längsgeschnitten, die durch die beiden Mittellinien (59) und (69) aufgespannt wird. In der halbseitigen Querschnittsfläche, die durch die Außen- und Aushöhlungskontur des Bauteils umschlossen wird, befindet sich an der Stelle der größten Materialanhäufung ein Messkreis (9), der an zwei Stellen an der Querschnittsaußenkontur und an einer Stelle an der Querschnittsinnenkontur anliegt. Dieser größte Messkreis (9) hat einen Durchmesser, der kleiner ist als 25 Prozent des mittleren Durchmessers der Aushöhlung (62).

Auf den Suprastrukturträger (20) wird im Ausführungsbeispiel ein Klebekörper (100) aufgeklebt oder aufzementiert, vgl. Figuren 1 bis 3. Der Klebekörper (100) ist ein Hohlkörper, der innerhalb der Zahnprothese zwischen dem Suprastrukturträger (20) und der künstlichen Zahnkrone (120) angeordnet ist. Mit seiner Hilfe wird u.a. die Winkellage der Zahnkrone (120) an die Winkellage des Implantatpfostens (23) angeglichen.

Der Klebekörper (100) hat im Wesentlichen eine hülsenförmige, z.B. weitgehend rotationssymmetrische Gestalt. Seine Innenwandung (105) ist zumindest bereichsweise - in Radialrichtung - an die Hüllfläche (28) des Implantatpfostens (23) angepasst, wobei sie die Schnittstellengeometrie (146) des negativen Schnittstellenteils (145) der Schnittstelle (141, 145) ist. Eine Ausnahme stellt die zwischen dem Klebekörper (100) und dem Suprastrukturträger (20) angeordnete Verdrehsicherung (41) dar.

Der Klebekörper (100) hat einen verbreiterten, z.B. umlaufenden Randbereich (107), mit dem er sich einerseits - in Axialrichtung - an der Flanschoberseite (37) des Suprastrukturträgers (20) abstützt und mit dem er andererseits selbst für die Krone (120) eine zumindest bereichsweise axiale Abstützung bietet.

Das Montagespiel in der Montagefuge (140) zwischen dem tragenden Suprastrukturträger (20) und dem aufsetzbaren Klebekörper (100) beträgt z.B. 30 bis 50 µm, so dass der Klebekörper (100) unter Zwischenlage eines Klebstoffes (113) auf dem Implantatpfosten (23) des Suprastrukturträgers (20) großflächig aufliegen kann.

Um verdrehsicher auf dem Suprastrukturträger (20) sitzen zu können, hat der Klebekörper (100) in seiner beispielsweise konischen Ausnehmung (106), z.B. im unteren Bereich, eine Nut (108), an deren Flanken sich der Verdrehsicherungssteg (41) des Suprastrukturträgers (20) abstützt. Die Nut (108) ist nicht Teil der Schnittstellengeometrie (146).

Im Bereich seiner Oberseite (102) weist der Klebekörper (100) eine bohrungsartige Ausnehmung (106) auf, die bei montierter Prothese eine Verlängerung der Bohrung (67) des Implantatpfostens (23) darstellt. Die Ausnehmung (106) kann nach dem Festschrauben der Schraube (90) ggf. mit einem Füllstoff (8) befüllt werden.

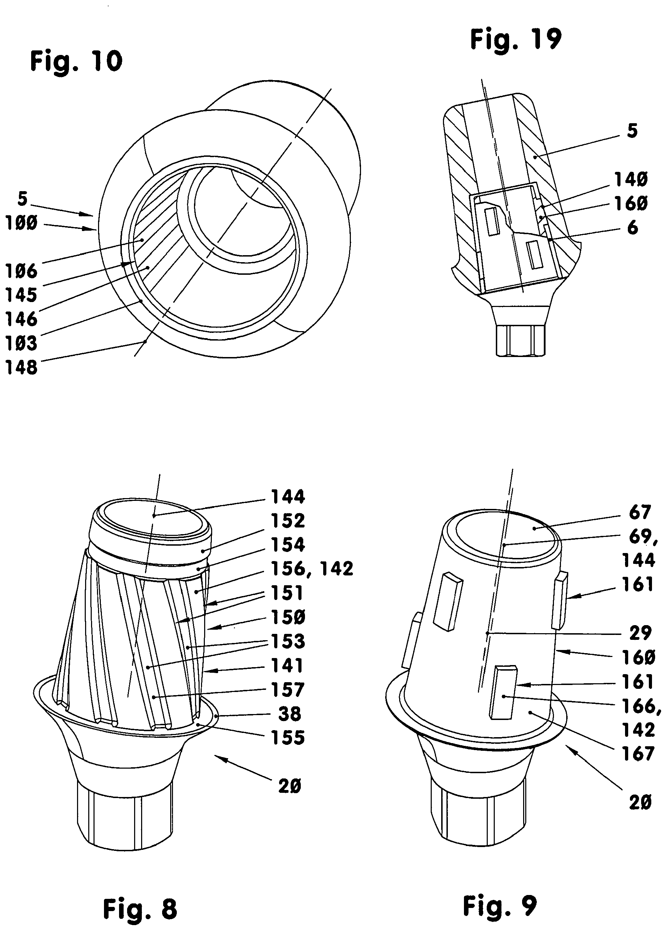

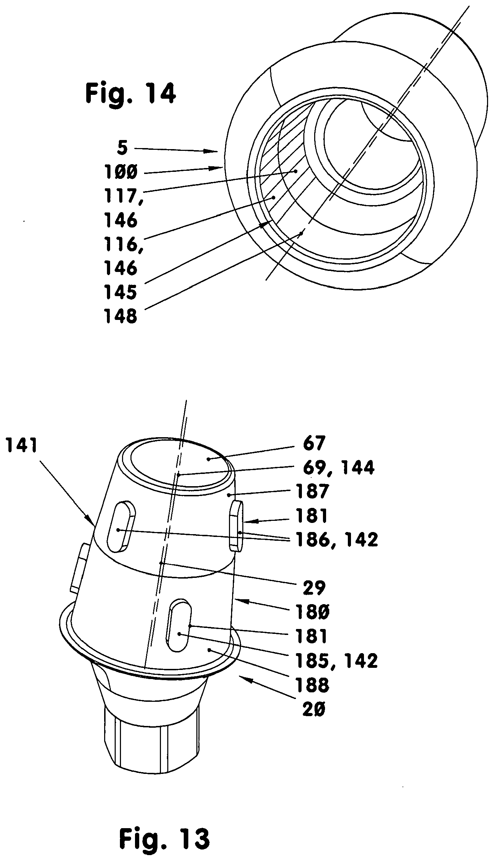

Für den Implantatpfosten (23) und das jeweilige Aufsetzmittel (5) gibt es einige alternative Schnittstellengeometrien (142, 146), die in den Figuren 8 bis 18 einzeln dargestellt werden.

Figur 8 zeigt einen Implantatpfosten (150) des Suprastrukturträgers (20) mit kegelstumpfmantelförmiger Schnittstellengeometrie (142). Sie ist eine Hüllfläche (156), die durch die radialen Außenseiten bzw. Kopfflächen der schraubenförmig gewundenen Stollen (151) und einen oberen umlaufenden Abschlussringsteg (152) gebildet wird. Die Stollen (151) folgen z.B. einer nach links gewundenen Schraubenlinie, die mit der Bezugsebene (38) einen Steigungswinkel von z.B. 70 Winkelgraden einschließt. Zwischen dem Abschlussringsteg (152) und den nach Figur 8 oberen Enden der Stollen (151) befindet sich eine Umlaufnut (154), in die die zwischen den Stollen (151) gelegenen Schraubnuten (153) münden.

Im Bereich des Implantatflansches enden die Stollen (151) in einer umlaufenden Kleberinne (155). Letztere verringert die aus Figur 4 bekannte reguläre Abstützhüllfläche (37) z.B. um mehr als 60 Prozent. Die Querschnitte der Nuten (153, 154) und der Rinne (155) - sie sind quer zu den Längsausdehnungen dieser Vertiefungen orientiert - sind eine Funktion der Viskosität des zu verwendenden Klebstoffes, mit dem die Schnittstellenteile (141) und (145) miteinander verklebt werden. Die Umlaufnut (154), die Schraubnuten (153) und die Kleberinne (155) stellen hier einen gemeinsamen Spaltraum (6) dar, vgl. Figur 19.

In der Figur 9 ist ein Implantatpfosten (160) gezeigt, der z.B. sechs Stollen (161) auf einer kegelstumpfmantelförmigen Basisfläche (167) trägt. Jeweils drei Stollen (161) sind so angeordnet, dass ihre Schwerpunkte auf einer Ebene liegen, die von der Mittellinie (29) normal geschnitten wird. Die Stollen (161) sind jeweils äquidistant auf dem Umfang verteilt. Die Stollen (161) der beiden Ebenen sind zueinander jeweils um eine halbe Teilung versetzt.

Der einzelne Stollen (161) hat im Wesentlichen eine quaderförmige Gestalt. Seine Länge entspricht dem 2,6-fachen seiner Breite. Die Höhe der Stollen beträgt z.B. 0,2 mm, was das 0,4-fache der Breite ist. Die radialen Außenseiten der Stollen (161) liegen in der die Hüllfläche (166) bildenden kegelstumpfmantelförmigen Schnittstellengeometrie (142).

Im vorliegenden Fall ist die Mittellinie (29) gegenüber der Mittellinie (69) um z.B. 0,12 mm versetzt. Die Mittellinie (69) rückt dabei näher an den Teil der mittleren Aushöhlungszone (64) heran, vgl. Figur 5, dessen Höhe am kürzesten ist.

Zu dem Implantatpfosten (150) passt als Schnittstellennegativteil (145) der in Figur 10 dargestellte Klebekörper (100). Seine konische Ausnehmung (106) bildet die kegelstumpfmantelförmige Schnittstellengeometrie (146).

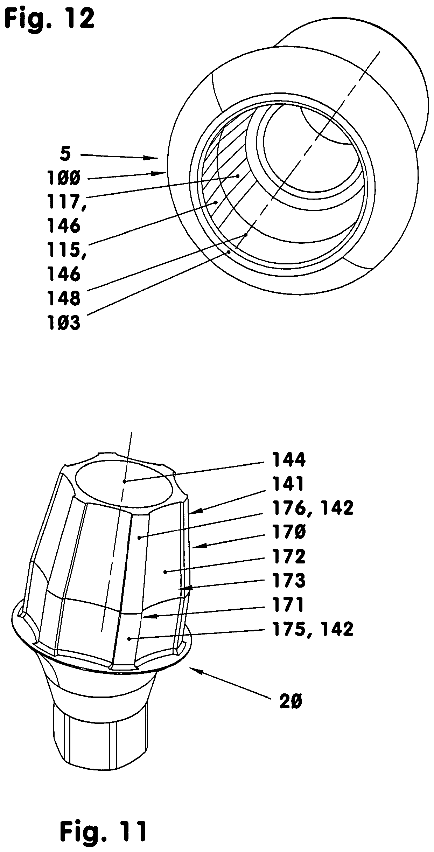

Nach Figur 11 hat der dargestellte Implantatpfosten (170) eine Schnittstellengeometrie (142), die aus einer unteren zylindrischen Hüllfläche (175) und einer oberen konischen Hüllfläche (176) besteht. Letztere hat einen Kegelwinkel von z.B. 18 Winkelgraden. Die Höhe der oberen längeren Hüllfläche (176) entspricht z.B. dem 1,8-fachen der unteren kürzeren Hüllfläche (175). Die in den Hüllflächen (175, 176) gelegenen Außenseiten der abgewinkelten, sich nach oben verjüngenden Stollen (171), deren Mittelachsen jeweils mit der Mittellinie (69) in einer Ebene liegen, werden durch breite Nuten (172) getrennt. Die Nuten (172) haben hierbei jeweils einen nach innen gekrümmten Nutgrund (173). Die Nutgründe (173) sind Teile eines Zylinders und/oder eines Kegelmantels. Die Krümmung des Nutgrundes (173) beträgt im unteren Bereich des Implantatpfostens (170) z.B. 55 Prozent des Maximaldurchmessers des Implantatflansches (31). Dabei liegt die Krümmungsmittellinie mit der Mittellinie (69) in einer Ebene.

Der entsprechende Klebekörper (100) hat eine zweiteilige Innenwandung, vgl. Figur 12. Der Teil der Innenwandung, der sich an die untere Stirnseite (103) anschließt, ist eine zylindrische Teilinnenwandung (115). Auf sie folgt in Richtung der Oberseite (102) eine kegelstumpfmantelförmige Teilinnenwandung (117).

Der Implantatpfosten (180) hat eine vergleichbare Schnittstellengeometrie (142). Allerdings ist hier auch die untere - von den unteren Stollen (181) vorgegebene - Hüllfläche ein Hüllkonus (185), dessen Kegelwinkel z.B. 10 Winkelgrade beträgt. Der obere Hüllkonus (186) hat einen Kegelwinkel, der z.B. bei 16 Winkelgraden liegt. Die Stollen (181) haben auf dem Implantatpfosten (180) eine Anordnung, die der des Implantatpfostens (160) entspricht. Auch die Stollengröße ist der dortigen Variante zu entnehmen. Die Stollen (181) haben anstelle der Quaderform der Stollen (161) z.B. die Form einer Passfeder nach DIN 6885, Form A. Allerdings ist die freie Außenseite der Stollen (181) gemäß der Hüllflächen (185, 186) gekrümmt.

Die Mittellinie (29) ist auch hier gegenüber der Mittellinie (69) um z.B. 0,12 mm versetzt, vgl. Beschreibung zu Figur 9.

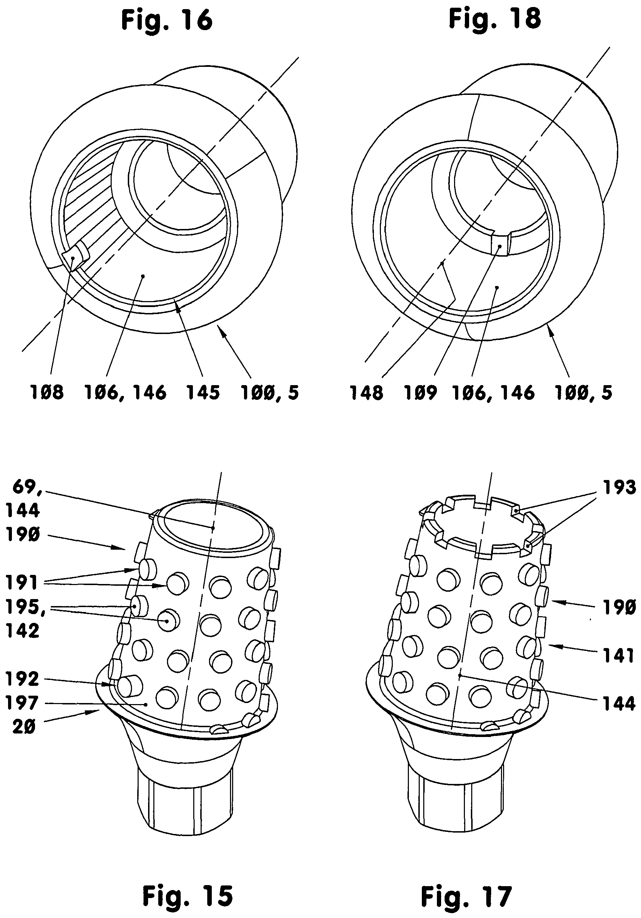

Die Figuren 15 und 17 zeigen jeweils einen Suprastrukturträger (20), dessen Implantatpfosten (190) eine kegelstumpfmantelförmige Basisfläche (197) hat, die mit einer Vielzahl von zylinderförmigen Zapfen (191) besetzt ist. Letztere können auch eine andere regelmäßige oder unregelmäßige Gestalt haben. Die freien, gekrümmten Stirnseiten der Zapfen (191) definieren auch hier eine kegelstumpfmantelförmige Hüllfläche (195). Die Zapfen (191) haben z.B. einen Durchmesser von 0,5 bis 1 mm. Sie sind im Ausführungsbeispiel auf einer z.B. rechtssteigenden Schraubenlinie angeordnet, die ihren Abstand mit zunehmender Entfernung von Implantatflansch gegenüber der Mittellinie (69) z.B. stetig verringert. Die Schraubenlinie hat hierbei eine Steigung von 5 bis 15 Winkelgraden. Auf der Schraubenlinie haben die Stollen (191) einen gegenseitigen Abstand, der z.B. dem Ein- bis Zweifachen ihres Durchmessers entspricht.

In der Nähe des Implantatflansches befindet sich nach Figur 15 ein Zapfen (192), der z.B. die 1 - 2,5-fache Länge eines Zapfens (191) aufweist. Der Zapfen (192) dient als Verdrehsicherungselement, das in eine entsprechende Nut (108) des Aufsetzelements (5) nach der Montage eingreift, vgl. Figur 16.

Anstelle dieses positiv aus der Gestalt des Implantatpfostens (190) hervorstehenden Verdrehsicherungselements (191) kann für die Herstellung einer Verdrehsicherung auch eine in den Implantatpfosten (190) eingearbeitete Nut (193), Kerbe oder dergleichen verwendet werden. In diese Nut (193) greift dann nach dem Aufsetzen des Aufsetzelements (5) eine Nase (109), ein Steg oder eine andere hervorstehende Struktur des Aufsetzelementes (5) hinein, vgl. Figur 18.

Bei allen Implantatpfosten (23, 150, 160, 180, 190) können die Schnittstellengeometrien (142) oder deren Bereiche von den jeweiligen gegenüberliegenden Basisflächen oder deren Bereiche einen konstanten oder einen variablen Abstand haben.

In der Regel haben die Schnittstellengeometrien (142) der Implantatpfosten jeweils Mittellinien (144), die deckungsgleich zu den zugehörigen Mittellinien der Basisflächen (157, 167, 187, 188, 197) sind. Abweichungen hiervon sind jedoch denkbar. Vergleichbares gilt auch für die Schnittstellengeometrien (146) der Aufsetzelemente (5) und deren Mittellinien (148).

Die Außensechskantschraube (90) ist in drei Bereiche aufgeteilt: einen Kopfbereich (91), einen Schaftbereich (96) und einen Gewindebereich (97), vgl. Figuren 1 und 3. Der erste Bereich ist der Kopfbereich (91). Er umfasst einen konusförmigen Kopfabschnitt (92) und eine darauf angeordnete Werkzeugaufnahme (94). Der z.B. 1,03 mm hohe Kopfabschnitt (92) hat die Form eines sich in Richtung Gewindebereich (97) verjüngenden Kegelstumpfes, der z.B. einen Kegelwinkel von 30 Winkelgraden aufweist. Der konusförmige Bereich, mit dem die Schraube (90) am Suprastrukturträger (20) anliegt, hat eine maximale Länge von z.B. 0,83 mm. Sein größter Durchmesser misst hier 2,06 mm.

Der Kopfabschnitt (92) endet in einer nach außen gewölbten, kegeligen Kopfabschnittsstirnfläche (93), deren Kegelwinkel z.B. 160 Winkelgrade beträgt. Auf der Kopfabschnittsstirnfläche (93) sitzt eine angeformte Werkzeugaufnahme (94), die einen kugelartigen Außensechskant für eine Schlüsselweite von 1,45 mm darstellt. Der Außensechskant weist sechs nebeneinander liegende Anlageflanken auf, die jeweils aus drei Flächenabschnitten bestehen. Der obere und der untere Flächenabschnitt (85, 86) erstreckt sich jeweils über z.B. 0,4 mm der Werkzeugaufnahmehöhe. Beide Flächenabschnitte sind eben und schließen mit der Schraubenmittellinie (89) jeweils z.B. einen Winkel von 11,5 Winkelgraden ein. Die oberen Enden der oberen Flächenabschnitte (85) neigen sich wie die unteren Enden der unteren Flächenabschnitte (86) zur Schraubenmittellinie (89) hin. Zwischen zwei übereinander angeordneten planen Flächenabschnitten (85, 86) ist jeweils ein bogenförmig nach außen gekrümmter Flächenabschnitt (87) angeordnet. Seine quer zur Schraubenmittellinie (89) orientierte Krümmung weist einen Radius von z.B. 0,9 mm auf.

Auf die Werkzeugaufnahme (94) ist zum Festziehen der Schraube (90) ein Rohrschlüssel mit Innensechskant aufsetztbar. Durch die spezielle Anordnung der oberen und unteren Flächenabschnitte (85, 86) erfährt der Rohrschlüssel bei der Drehmomentweitergabe keine Reaktionskraft entlang seiner Längsausdehnung. Die vordere Stirnseite des Rohrschlüssels wälzt auf der kegelstumpfmantelförmigen Kopfabschnittsstirnfläche (93) des Schraubenkopfes (92) reibungsarm und störungsfrei ab.

An den konusförmigen Bereich des Kopfabschnitts (92) schließt sich beispielsweise tangential der zweite Bereich, also der Schaftbereich (96) an. Der dehnschraubenartige Schaftbereich (96) besteht aus einer rotationssymmetrischen Taille, die im Schraubenmittenbereich, z.B. 3,5 mm vom freien Ende des Kopfbereiches (91) entfernt, ihren kleinsten Durchmesser, z.B. 1,3 mm, hat. Die mittlere Krümmung der Außenkontur der Taille hat im Schnitt nach Figur 3 einen Radius von z.B. 4,44 mm.

Der dritte Bereich ist der Gewindebereich (97). Er weist ein z.B. gerolltes M1, 6-Gewinde auf, dessen nutzbare Länge z.B. 2,6 mm beträgt.

Nach dem Ausführungsbeispiel sitzt die Zahnkrone (120) auf einem Klebekörper (100). Demnach ist die Innenwandung (125) der Zahnkrone (120) an die Außenwandung (101) des Klebekörpers (100) angepasst. Auch hier liegt das sich zwischen der Außenwandung (101) und Innenwandung (125) befindende Spiel bei 30 bis 50 um. Der Klebekörper (100) und die Zahnkrone (120) sind im Bereich des Randes (132) ihrer Klebefuge (131) so gestaltet, dass die letzten zehntel Millimeter in einem Winkel von 90 ± 10 Winkelgraden auf die gemeinsame Prothesenaußenfläche (2) treffen. Im Bereich des Randes ihrer Klebefuge (131) gehen die Außenfläche (121) der Zahnkrone (120) und die Außenfläche (101) des Klebekörpers (100) tangential oder zumindest fast tangential ineinander über. Sollte dort ein Knick vorgesehen sein, so liegt sein eingeschlossener Winkel in einem Bereich, der kleiner als 180 und größer als 175 Winkelgrade ist.

Nach Figur 3 sitzt somit bei der fertigen Prothese der Suprastrukturträger (20) mittels eines Implantatkonus (53) und des Verdrehsicherungsprofils (54) verdrehsicher und mittels der Schraube (90) verschraubt im Konussitz (14) des Implantatkörpers (10). Der Implantathals (52) und die Unterseite (32) des Implantatflansches (31) liegen in der Regel am hier nicht dargestellten Zahnfleisch an. Auf dem Implantatflansch (31) sitzt verklebt die Kombination aus dem Klebekörper (100) und der künstlichen Zahnkrone (120).

In der Druckschrift werden mehrere Textstellen erwähnt, nach denen Ebenen senkrecht, z.B. von Mittellinien, geschnitten sind. In diesen Fällen sollen Winkelabweichungen von ± 2 Winkelgraden noch zu senkrecht zählen.

### Bezugszeichenliste:

- 1: Zahnersatz, prothetisch
- 2: Prothesenaußenfläche
- 5: Aufsetzelement, Messmittel, Abformmittel negativer Schnittstellenteil
- 6: Spaltraum, Füllraum, Zwischenraum
- 8: Zement, Klebstoff, Füllstoff
- 9: Messkreis

- 10: Implantatkörper
- 11: Außengewinde
- 12: Implantatschulter
- 13: Ausnehmung, gestuft
- 14: Innenkonus, erste Zone, Konus, Konussitz
- 15: Innensechskant, zweite Zone, Gegenprofil
- 17: Gewindebohrung, dritte Zone
- 18: Innengewinde
- 19: Mittellinie von (10)

- 20: Suprastrukturträger Teil eines Hybridabutments
- 21: Bereich, der Zahnkrone zugewandt
- 23: Implantatpfosten, positiver Schnittstellenteil
- 24: Oberseite, Auflagefläche
- 26: Stollen
- 27: Außenfläche, radial
- 28: Hüllfläche
- 29: Mittellinie von (23)

- 31: Implantatflansch
- 32: Unterseite, dem Zahnfleisch zugewandte Fläche
- 33: Rand
- 34: Übergangsbereich, Ausrundung
- 35: Rinne
- 37: Flanschoberseite, Abstützhüllfläche
- 38: Ebene, Bezugsebene
- 41: Verdrehsicherungssteg, Verdrehsicherung

- 50: Implantatzapfen
- 51: Bereich, dem Implantatkörper zugewandt
- 52: Implantathals
- 53: Implantatkonus, Außenkonus
- 54: Verdrehsicherungsprofil, Außensechskant
- 59: Mittellinie von (50)

- 61: Aushöhlung, geknickt; Schraubeneinführausnehmung
- 62: untere Aushöhlungszone; Bohrung, zylindrisch
- 63: Mittellinie von (62)
- 64: mittlere Aushöhlungszone
- 65: Schraubenkopfsitzfläche, Innenkonus, Aushöhlungszone
- 67: obere Aushöhlungszone; Bohrung, zylindrisch
- 69: Mittellinie von (67)

- 71: Schnittpunkt
- 72: Abstand zwischen (38) und (71)
- 73: Oberkante von (65)
- 75: Kegelstumpfmantelfläche, Abstützhüllfläche; nach oben gewölbt
- 76: Kegelstumpfmantelfläche, Abstützhüllfläche; nach unten gewölbt
- 77: Stirnfläche, groß von (75) oder (76)
- 78: Kegelwinkel von (75) oder (76)
- 79: Mittellinie, Rotationsachse von (75, 76)
- 85, 86: Flächenabschnitte von (94), plan
- 87: Flächenabschnitte von (94), gekrümmt
- 89: Schraubenmittellinie

- 90: Außensechskantschraube, Schraube
- 91: Kopfbereich
- 92: Kopfabschnitt, konusförmig; Schraubenkopf
- 93: Kopfabschnittsstirnfläche
- 94: Werkzeugaufnahme; Außensechskant, kugelartig
- 96: Schaftbereich, Taille, Schaft
- 97: Gewindebereich, Gewinde

- 100: Klebekörper, Teil eines Hybridabutments, negativer Schnittstellenteil
- 101: Außenwandung, Außenfläche
- 102: Oberseite
- 103: Stirnseite, unten
- 105: Innenwandung, Innenfläche, gesamt
- 106: Ausnehmung, kegelstumpfmantelförmig
- 107: Randbereich
- 108: Nut, Verdrehsicherungsnut
- 109: Verdrehsicherungsnase
- 111: Klebefuge zwischen (23) und (100)
- 113: Klebstoff
- 115: Teilinnenwandung, zylindrisch, implantatflanschnah
- 116: Teilinnenwandung, kegelstumpfmantelförmig, implantatflanschnah
- 117: Teilinnenwandung, kegelstumpfmantelförmig implantatflanschfern
- 120: Zahnkrone, künstlich, Suprakonstruktion, ggf. negativer Schnittstellenteil
- 121: Außenwandung, Außenfläche
- 125: Innenwandung, Innenfläche
- 131: Klebefuge zwischen (100) und (120)
- 132: Klebefugenrand
- 133: Klebstoff

- 140: Montagefuge zwischen (23) und (100)
- 141: Schnittstelle; Positivteil
- 142: Schnittstellengeometrie von (141)
- 144: Mittellinie von (142)
- 145: Schnittstelle; Negativteil
- 146: Schnittstellengeometrie von (145)
- 148: Mittellinie von (146)

- 150: Implantatpfosten mit geschraubten Stollen
- 151: Stollen, schraubenförmig gewunden
- 152: Abschlussringsteg
- 153: Schraubnuten
- 154: Umlaufnut
- 155: Rinne
- 156: Hüllfläche, kegelmantelförmig
- 157: Basisfläche, kegelmantelförmig

- 160: Implantatpfosten mit versetzten Stollen
- 161: Stollen, im Wesentlichen quaderförmig
- 166: Hüllfläche, kegelmantelförmig
- 167: Basisfläche, kegelmantelförmig
- 170: Implantatpfosten mit geknickten Stollen
- 171: Stollen, abgeknickt
- 172: Nuten
- 173: Nutgrund, nach innen gewölbt
- 175: Hüllzylinder; Hüllfläche, zylindrisch
- 176: Hüllkonus; Hüllfläche kegelstumpfmantelförmig

- 180: Implantatpfosten mit versetzten Passfederstollen
- 181: Stollen, passfederförmig
- 185: Hüllkonus, unten; Hüllfläche, kegelstumpfmantelförmig
- 186: Hüllkonus, oben; Hüllfläche, kegelstumpfmantelförmig
- 187, 188: Basisflächen; unten, oben

- 190: Implantatpfosten mit versetzten Zapfen
- 191: Zapfen, zylinder- oder kegelstumpfförmig; Stollen
- 192: Verdrehsicherungsstollen
- 193: Verdrehsicherungsnuten
- 195: Hüllfläche, kegelstumpfmantelförmig
- 197: Basisfläche

## Patentansprüche

1. Suprastrukturträger (20) mit einem Aufsetzelement (5) als Teil eines prothetischen Zahnersatzes (1) zwischen einem Implantatkörper (10) und einer Suprakonstruktion, mit einem hohlen Implantatpfosten (23, 150, 160, 170, 180, 190), einem hohlen Implantatzapfen (50) und einem dazwischen liegenden Implantatflansch (31), wobei die Aushöhlungszonen (67, 62) des Implantatpfostens (23, 150, 160, 170, 180, 190) und des Implantatzapfens (50) ineinander übergehen und deren Mittelinien (69, 63) sich schneiden und wobei auf dem Implantatpfosten (23, 150, 160, 170, 180, 190) das Aufsetzelement (5) über eine - eine Schnittstelle (141, 145) bildende - Montagefuge (140) verdrehsicher anordenbar ist,
- wobei das Aufsetzelement (5) eine künstliche Krone (120), ein Verbund aus einem Klebekörper (100) und einer Krone (120) oder ein anderes kappenartiges Element ist,
- wobei zumindest Bereiche des Implantatflansches (31) eine Abstützhüllfläche (37) haben,
- wobei das Aufsetzelement (5) eine Schnittstellengeometrie (146) hat, die zumindest bereichsweise form- und/oder kraftschlüssig auf der Schnittstellengeometrie (142) des Suprastrukturträgers (20) montierbar ist,
- wobei die jeweilige Schnittstellengeometrie (142, 146) unter Ausschluss eines oder mehrerer die Verdrehsicherung garantierenden Geometriebereiche (41, 108, 109, 192, 193) eine äußere (28, 156, 166, 175, 176, 185, 186, 195) oder eine innere Hüllfläche hat,
- wobei der Implantatpfosten (23, 150, 160, 170, 180, 190) oder das Aufsetzelement (5) jeweils eine Basisfläche (157, 167, 187, 188, 197) aufweist, die mit der Hüllfläche (28, 156, 166, 175, 176, 185, 186, 195) desselben Bauteils einen Spaltraum (6) einschließt, dessen mittlere Stärke mehr als 0,05 mm misst und
- wobei im Spaltraum (6) von der jeweiligen Basisfläche (157, 167, 187, 188, 197) mehrere Erhebungen in Form von Stollen, Stegen, Zapfen, Nasen oder Noppen vom Implantatpfosten (23, 150, 160, 170, 180, 190) oder vom Aufsetzelement (5) abstehen.

2. Suprastrukturträger nach Anspruch 1, **dadurch gekennzeichnet, dass** die äußere (28, 156, 166, 175, 176, 185, 186, 195) und/oder innere Hüllfläche der Schnittstellengeometrie (142, 146) jeweils eine Mittellinie (144, 148) hat, die entweder die Abstützhüllfläche (37) senkrecht schneidet oder mit deren Rotationsache (79) zusammenfällt.

3. Suprastrukturträger nach Anspruch 1, **dadurch gekennzeichnet, dass** sich die Schnittstellengeometrien (142, 146) aus einem Zylindermantel, einem Kegelstumpfmantel oder aus mehreren gleichartigen oder verschiedenen Mänteln zusammensetzen.

4. Suprastrukturträger nach Anspruch 3, **dadurch gekennzeichnet, dass** die Mittellinien (144, 148) der einzelnen Mäntel oder Mantelkombinationen der Schnittstellengeometrien (142, 146) zueinander deckungsgleich sind.

5. Suprastrukturträger nach Anspruch 1, **dadurch gekennzeichnet, dass** die Abstützhüllfläche (37) entweder eine Ebene (38) oder eine Kegelstumpfmantelfläche (75, 76) ist.

6. Suprastrukturträger nach Anspruch 5, **dadurch gekennzeichnet, dass** bei einer kegelstumpfmantelförmigen Abstützhüllfläche (75, 76) die theoretische Kegelspitze dem Implantatpfosten (23, 150, 160, 170, 180, 190) oder dem Implantatzapfen (50) zugewandt ist.

7. Suprastrukturträger nach Anspruch 5, **dadurch gekennzeichnet, dass** der Kegelwinkel der kegelstumpfmantelförmigen Abstützhüllfläche (75, 76) zwischen 180 und 165 Winkelgraden liegt.

## Claims

1. A suprastructure support (20) with an attachment element (5) as part of a prosthetic tooth replacement (1) between an implant body (10) and a supraconstruction, with a hollow implant post (23, 150, 160, 170, 180, 190), a hollow implant pin (50) and an implant flange (31) lying therebetween, wherein the cavity zones (67, 62) of the implant post (23, 150, 160, 170, 180, 190) and of the implant pin (50) continue into one another and the centre lines of (69, 63) of which intersect one another and wherein on the implant post (23, 150, 160, 170, 180, 190) the attachment element (5) is able to be arranged in a non-rotatable manner by means of an assembly joint (140) - forming an interface (141, 145) -,
- wherein the attachment element (5) is an artificial crown (120), a composite of an adhesive body (100) and a crown (120) or another cap-type element,
- wherein at least regions of the implant flange (31) have a supporting enveloping surface (37),
- wherein the attachment element (5) has an interface geometry (146) which at least in some areas is able to be mounted in a form- and/or force-fitting manner on the interface geometry (142) of the suprastructure support (20),
- wherein the respective interface geometry (142, 146), excluding one or more geometry regions (41, 108, 109, 192, 193) guaranteeing the security against rotation, has an outer (28, 156, 166, 175, 176, 185, 186, 195) or an inner enveloping surface,
- wherein the implant post (23, 150, 160, 170, 180, 190) or the attachment element (5) has respectively a base surface (157, 167, 187, 188, 197) which with the enveloping surface (28, 156, 166, 175, 176, 185, 186, 195) of the same component encloses a gap space (6), the average thickness of which measures more than 0.05 mm and
- wherein in the gap space (6) from the respective base surface (157, 167, 187, 188, 197) several elevations in the form of studs, webs, pins, noses or nubs project from the implant post (23, 150, 160, 170, 180, 190) or from the attachment element (5).

2. The suprastructure support according to Claim 1, **characterized in that** the outer (28, 156, 166, 175, 176, 185, 186, 195) and/or inner enveloping surface of the interface geometry (142, 146) respectively has a centre line (144, 148) which either intersects the supporting enveloping surface (37) perpendicularly or coincides with its rotation axis (79).

3. The suprastructure support according to Claim 1, **characterized in that** the interface geometries (142, 146) are composed of a cylinder shell, a truncated cone shell or of several identical or different shells.

4. The suprastructure support according to Claim 3, **characterized in that** the centre lines (144, 148) of the individual shells or shell combinations of the interface geometries (142, 146) are congruent with one another.

5. The suprastructure support according to Claim 1, **characterized in that** the supporting enveloping surface (37) is either a plane (38) or a truncated cone shell surface (75, 76).

6. The suprastructure support according to Claim 5, **characterized in that** with a supporting enveloping surface (75, 76) in the shape of a truncated cone shell, the theoretical cone tip faces the implant post (23, 150, 160, 170, 180, 190) or the implant pin (50).

7. The suprastructure support according to Claim 5, **characterized in that** the cone angle of the supporting enveloping surface (75, 76) in the shape of a truncated cone shell lies between 180 and 165 angular degrees.

## Revendications

1. Support de suprastructure (20) comprenant un élément de pose (5) en tant que partie d'une prothèse dentaire (1) entre un corps d'implant (10) et une supraconstruction, comprenant un pilier d'implant (23, 150, 160, 170, 180, 190) creux, une cheville d'implant (50) creuse et une bride d'implant (31) placée entre, dans lequel les zones de cavité (67, 62) du pilier d'implant (23, 150, 160, 170, 180, 190) et de la cheville d'implant (50) passent l'une dans l'autre et leur lignes médianes (69, 63) se coupent, et dans lequel l'élément de pose (5) peut être agencé en sécurité anti-rotation sur le pilier d'implant (23, 150, 160, 170, 180, 190) par le biais d'un joint de montage (140) formant une interface (141, 145),
- dans lequel l'élément de pose (5) est une couronne artificielle (120), un composite d'un corps collant (100) et d'une couronne (120) ou un autre élément de type bouchon,
- dans lequel au moins des parties de la bride d'implant (31) ont une surface d'enveloppe d'appui (37),
- dans lequel l'élément de pose (5) a une géométrie d'interface (146) qui peut être montée, au moins par tronçons, en complémentarité de formes et/ou adhérence des forces sur la géométrie d'interface (142) du support de suprastructure (20),
- dans lequel la géométrie d'interface (142, 146) respective, sans l'intégration d'une ou plusieurs partie(s) géométrique(s) (41, 108, 109, 192, 193) garantissant la sécurité anti-rotation, a une surface d'enveloppe extérieure (28, 156, 166, 175, 176, 185, 186, 195) ou intérieure,
- dans lequel le pilier d'implant (23, 150, 160, 170, 180, 190) ou l'élément de pose (5) présente respectivement une surface de base (157, 167, 187, 188, 197) qui englobe un espace fendu (6) avec la surface d'enveloppe (28, 156, 166, 175, 176, 185, 186, 195) de cette même pièce, dont l'épaisseur centrale mesure plus de 0,05 mm et
- dans lequel dans l'espace fendu (6) de la surface de base (157, 167, 187, 188, 197) respective, plusieurs éminences sous forme de crampons, arêtes, tourillons, ergots ou picots font saillie du pilier d'implant (23, 150, 160, 170, 180, 190) ou de l'élément de pose (5).

2. Support de suprastructure selon la revendication 1, **caractérisé en ce que** la surface d'enveloppe extérieure (28, 156, 166, 175, 176, 185, 186, 195) et/ou intérieure de la géométrie d'interface (142, 146) a respectivement une ligne médiane (144, 148) qui, soit coupe verticalement la surface d'enveloppe d'appui (37), soit coïncide avec son axe de rotation (79).

3. Support de suprastructure selon la revendication 1, **caractérisé en ce que** les géométries d'interface (142, 146) se composent d'une enveloppe cylindrique, d'une enveloppe tronconique ou de plusieurs enveloppes de même type ou différentes.

4. Support de suprastructure selon la revendication 3, **caractérisé en ce que** les lignes médianes (144, 148) des différentes enveloppes ou combinaisons d'enveloppes des géométries d'interface (142, 146) coïncident entre elles.

5. Support de suprastructure selon la revendication 1, **caractérisé en ce que** la surface d'enveloppe d'appui (37) est soit un plan (38), soit une surface d'enveloppe tronconique (75, 76).

6. Support de suprastructure selon la revendication 5, **caractérisé en ce qu'**avec une surface d'enveloppe d'appui (75, 76) en forme d'enveloppe tronconique, la pointe de cône théorique est tournée vers le pilier d'implant (23, 150, 160, 170, 180, 190) ou la cheville d'implant (50).

7. Support de suprastructure selon la revendication 5, **caractérisé en ce que** l'angle de cône de la surface d'enveloppe d'appui (75, 76) en forme d'enveloppe tronconique est situé entre 180 et 165 degrés.
